# EUROPÄISCHE PATENTANMELDUNG

(11) **EP 4 335 577 A1**
(43) Veröffentlichungstag der Anmeldung: **13.03.2024**
(21) Anmeldenummer: 22194806.0
(22) Anmeldetag: 09.09.2022
(51) Int. Cl.: B23B 31/39, B25B 7/12

(54) **WECHSELVORRICHTUNG FÜR SPANNKÖPFE**

(71) Anmelder: Hainbuch GmbH Spannende Technik, 71672 Marbach (DE)
(72) Erfinder: Hetschel, Martin, 74336 Brackenheim (DE); Rall, Gerhard, 71672 Marbach (DE)
(74) Vertreter: Witte, Weller und Partner Patentanwälte mbB Stuttgart

(57) **Zusammenfassung**

Bekannt sind Wechselvorrichtungen (10) für Spannköpfe (100). Solche Wechselvorrichtungen (10) sind zum Einsetzen eines Spannkopfes (100) in ein Spannfutter und/oder zum Entfernen des Spannkopfes (100) aus dem Spannfutter ausgebildet, wobei der Spannkopf (100) eine Mehrzahl von in einer Radialrichtung (4) gegeneinander verlagerbaren Spannbacken (104) aufweist, die mittels der Wechselvorrichtung (10) in Radialrichtung aufeinander zu oder voneinander weg gegeneinander kraftbeaufschlagbarsind.

Eine solche Wechselvorrichtung (10) verfügt über eine Basis (42) sowie über eine Mehrzahl von Stellelementen (50), die beweglich an der Basis (42) angebracht sind und die jeweils über mindestens einen Eingriffsabschnitt (52) zur Kraftbeaufschlagung der Spannbacken (104) verfügen.

Es wird vorgeschlagen, dass eine solche Wechselvorrichtung (10) über ein gegenüber der Basis um eine Mittelachse (2) drehbewegliches Antriebsglied (60) verfügt. Dieses Antriebsglied (60) ist mittels eines Getriebes (70) mit den Stellelementen (50) gekoppelt, so dass durch eine Rotationsbewegung des Antriebsgliedes (60) die Stellelemente (50) gemeinsam aufeinander zu oder voneinander weg bewegt werden können.

## Beschreibung

### ANWENDUNGSGEBIET UND STAND DER TECHNIK

Die Erfindung betrifft eine Wechselvorrichtung für Spannköpfe.

Solche Spannköpfe, die mit einer erfindungsgemäßen Wechselvorrichtung bestimmungsgemäß gehandhabt werden, dienen derAufnahme von Werkstücken während der Bearbeitung, insbesondere während einer spanenden Bearbeitung bei vorzugsweise rotierendem Werkstück. Spannköpfe, die mittels einer gattungsgemäßen sowie einer erfindungsgemäßen Wechselvorrichtung wechselbar sein sollen, zeichnen sich durch eine Mehrzahl von Spannbacken aus, die im Zuge des Spannens aufeinander zu verlagert werden, um das zwischen ihnen angeordnete Werkstück hierdurch einzuspannen.

Die Spannköpfe werden bestimmungsgemäß in ein Spannfutter eingespannt, welches meist Teil einer im Betrieb rotierenden Spindel ist. Das Einsetzen des Spannkopfes in das Spannfutter erfolgt üblicherweise dadurch, dass die Spannbacken mittels einer Wechselvorrichtung gegeneinander kraftbeaufschlagt werden, insbesondere indem sie bei gleichzeitiger Komprimierung von elastischen Zwischenblöcken radial aufeinander zu gedrückt werden. In diesem komprimierten Zustand sind sie dann in das Spannfutter einführbar. Sobald die Kraftbeaufschlagung der Spannbacken gegeneinander entfällt, kehren die Spannbacken in ihre radiale Ausgangsrelativlage zurück, in der sie dann üblicherweise formschlüssig gegen eine Trennung vom Spannfutter gesichert sind und anschließend zum bestimmungsgemäßen Einspannen von Werkstücken verwendet werden können.

Gattungsgemäße Wechselvorrichtungen sind üblicherweise manuell betätigt. Ein Beispiel für eine solche manuell betätigte Wechselvorrichtung ist beispielsweise aus der DE 10 2017 201 200 A1 bekannt.

Die für die Handhabung der Wechselvorrichtung erforderliche Körperkraft ist relativ hoch. Dies ist zum einen durch die Masse der Wechselvorrichtung und des Spannkopfes bedingt, zum anderen jedoch auch durch die aufzubringende Kraft, die für die genannte Komprimierung des Spannkopfes gegen die Kraft der elastischen Zwischenblöcke erforderlich ist. In der Vergangenheit gab es daher eine Vielzahl von Anpassungen im Bereich der Kraftübersetzung vom manuell betätigten Griff der Wechselvorrichtung zu Stellelementen der Wechselvorrichtung, die für die Kraftbeaufschlagung der Spannbacken verantwortlich sind. Häufig verlangen neue Modell von Spannköpfen auch neue Wechselvorrichtungen.

Da in der industriellen Fertigung häufig eine Vielzahl von unterschiedlichen Spannköpfen Verwendungfindet, ist es üblich, auch eine Vielzahl von Wechselvorrichtungen hierfür vorzusehen, die unter anderem an die für den jeweiligen Spannkopf zum Zwecke der Komprimierung erforderliche Kraft angepasst sind.

### AUFGABE UND LÖSUNG

Aufgabe der Erfindung ist es, eine Wechselvorrichtung zur Verfügung zu stellen, die eine Komprimierung mit einem verringerten Kraftaufwand ermöglicht und somit den Bedarf verringert, an spezifische Spannköpfe angepasste Wechselvorrichtungen bereitzustellen.

Zu diesem Zweck wird eine Wechselvorrichtung vorgeschlagen, die in Übereinstimmung mit gattungsgemäßen Wechselvorrichtungen zum Einsetzen eines Spannkopfes in ein Spannfutter und/oder zum Entfernen des Spannkopfes aus dem Spannfutter ausgebildet ist. DieWechselvorrichtung ist dafür ausgebildet, eine Mehrzahl von in einer Radialrichtung gegeneinander verlagerbaren Spannbacken des Spannkopfes in Radialrichtung aufeinander zu odervoneinander weg kraftzubeaufschlagen.

Die Wechselvorrichtung verfügt hierfür über eine zentrale Basis und über eine Mehrzahl von Stellelementen, die beweglich an der Basis angebracht sind und die jeweils über mindestens einen Eingriffsabschnitt zur Kraftbeaufschlagung der Spannbacken verfügen. Die Stellelemente können rein linear radial verlagerbar sein. Vorzugsweise jedoch sind sie um eine Tangentialachse schwenkbeweglich an der Basis angebracht. Vorzugsweise handelt es sich um mindestens drei Stellelemente, die in um 120° beabstandeten Richtungen gegenüber der Basis beweglich sind.

Die Stellelemente werden bei Betätigung der Wechselvorrichtung aufeinander zu verlagert und drücken daher über die Eingriffsabschnitte auch die Spannbacken des Spannkopfes aufeinander zu und somit in den genannten komprimierten Zustand, in dem die Einfügung bzw. Entnahme des Spannkopfes in das Futter bzw. aus dem Futter möglich ist. Eine mögliche und bevorzugt Bauform sieht vor, dass die Stellelemente jeweils mindestens einen Eingriffsabschnitt in Form eines zylindrischen Stifts aufweisen, der in eine entsprechende Bohrung der Spannbacke eingreift. Vorzugsweise verfügen Eingriffsabschnitte jeweils über mindestens zwei Eingriffsabschnitte in Form von parallel erstreckten zylindrischen Stiften.

Zur gemeinsamen Verlagerung der Stellelemente radial nach außen oder radial nach innen verfügt die Wechselvorrichtung über ein gegenüber der Basis um eine Mittelachse drehbewegliches Antriebsglied. Wird dieses Antriebsglied gedreht, so werden abhängig von der Drehrichtung die Stellelemente nach innen und aufeinanderzu oder nach außen und voneinander weg verlagert. Zur Umsetzung der rotatorischen Bewegung des Antriebsgliedes auf die lineare Radialverlagerung oder schwenkbewegliche Radialverlagerung der Stellelemente ist ein Getriebe vorgesehen.

Die Gestaltung der Wechselvorrichtung mit einem um die Mittelachse drehbaren Antriebsglied gestattet es, die Strecke bzw. den Winkel zu vergrößern, dessen Zurücklegung die Wechselvorrichtung aus einem ungespannten in einen gespannten Zustand überführt, indem die Stellelemente aus einer äußeren Lage in eine innere Lage zusammengeführt werden.

Während ein Handgriff in der bei bekannten Wechselvorrichtungen üblicherweise um nicht mehr als 5 bis 10 cm verlagert wird bzw. um nicht mehr als 10° bis 15° verschwenkt wird, kann ein drehbares Antriebsglied um viele Umdrehungen gedreht werden, um die Wechselvorrichtung und ihre Stellelemente aus dem ungespannten in den gespannten Zustand zu überführen. Entsprechend geringer ist das erforderliche Moment bzw. die erforderliche Kraft. Das genannte Getriebe der Wechselvorrichtung ist vorzugsweise derart ausgelegt, dass es mindestens eine volle Umdrehung des Antriebsgliedes braucht, um die Stellelemente zwischen ihrer äußeren Endlage und ihrer inneren Endlage zu verlagern. Vorzugsweise sind mehrere Umdrehungen hierfür erforderlich, vorzugsweise mindestens 5, insbesondere vorzugsweise mindestens 20.

Das Antriebsglied kann selbst mittels eines Gewindes an der Basis befestigt sein, so dass die beschriebene Rotation des Antriebsgliedes zu einer überlagerten axialen und rotativen Bewegung relativ zur Basis führt. Die axiale Komponente dieser Bewegung wird verwendet, um mittelbar auf die Stellelemente zu wirken und dadurch die radiale Verlagerung zu erzielen.

Es ist jedoch bevorzugt, wenn das Antriebsglied ausschließlich rotativ gegenüber der Basis beweglich ist, selbst also nicht entlang einer Mittelachse translativ verlagerbar ist. In einem solchen Fall ist es bevorzugt, wenn die Wechselvorrichtung neben dem Antriebsglied eine Schiebehülse aufweist. Diese Schiebehülse ist translativ beweglich, jedoch dabei drehfest an der Basis angebracht. Unter drehfest wird in diesem Zusammenhang verstanden, dass die Schiebehülse nicht vollständig frei an der Basis drehbar ist, sondern nach maximal einer Umdrehung ein Drehendlage erreicht. Die Schiebhülse steht mit dem ausschließlich rotativen Antriebsglied über ein Gewinde im Eingriff, so dass die die Drehbewegung des Antriebsgliedes in eine axiale Verlagerung der Schiebehülse überführt wird. Diese axiale Verlagerung der Schiebehülse wiederum wird über einen weiteren Teil des Getriebes auf die Stellelemente übertragen. Die Übertragung kann beispielsweise über einen Anschlagssteg an der Schiebehülse erfolgen, mittels dessen die Schiebehülse auf korrespondierende Anschlagsflächen an den Stellelementen oder an einem Zwischenglied wirkt.

Eine andere mögliche Gestaltung des Getriebes der Wechselvorrichtung sieht vor, dass das Getriebe über mindestens eine Nockenscheibe verfügt, die um die Mittelachse der Wechselvorrichtung drehbar ist und die unmittelbar oder mittelbar auf die Stellelemente wirkt. Eine solche Nockenscheibe kann beispielsweise über drei gegenüber um 120° beabstandete Nocken verfügen, die durch Drehbewegung der Nockenscheibe auf drei Stellelemente wirkt und somit deren Radialbewegung steuern. Die Nockenscheibe kann unmittelbar drehfest mit der Antriebshülse verbunden sein. Da dies jedoch zu einem sehr hohen erforderlichen Moment zum Spannen des Spannkopfs führt, wird es bevorzugt, wenn zwischen der Antriebgshülse und der Nockenscheibe ein Untersetzungsgetriebe vorgesehen ist, vorzugsweise mit einer Untersetzung zwischen 2:1 und 200:1.

Eine erfindungsgemäße Wechselvorrichtung kann zur manuellen Kraftbeaufschlagung vorgesehen sein. In einem solchen Falle ist vorzugsweise ein Drehgriff, beispielsweise in Art einer Kurbel, an der Antriebshülse vorgesehen.

Die Möglichkeit, über die Antriebshülse eine Drehbewegung in die Wechselvorrichtung einzukoppeln und dadurch die Stellelemente radial zu verlagern, gestattet es darüber jedoch auch, die Wechselvorrichtung mit einer elektrische Antriebseinheit auszustatten. Eine solche elektrische Antriebseinheit verfügt über einen Elektromotor mit einer Abtriebswelle, die unmittelbar oder mittelbar mit dem Antriebsglied gekoppelt ist. Dabei kann die Abtriebswelle des Motors direkt auf das Antriebsglied wirken oder mit dieser sogar einstückig verbunden sein. Es kann jedoch auch hier noch ein Untersetzungsgetriebe vorgesehen sein.

Der Elektromotor kann über einen Netzanschluss mit Strom gespeist werden. In diesem Falle weist die Wechselvorrichtung ein entsprechendes Anschlusskabel auf zum Anschluss an einen 110V/220V-Anschluss auf. Vorteilhaft ist es jedoch, wenn die Wechselvorrichtung über eine vorzugweise wiederaufladbare Batterie zur Versorgung des Elektromotors verfügt. Insbesondere vorteilhaft ist hierbei die Verwendung von werkzeuglos wechselbaren wiederaufladbaren Batterien.

Die Wechselvorrichtung mit Elektromotor weist vorzugsweise mindestens ein Bedienelement auf, insbesondere einen Schalter, der aus einer Neutrallage in zwei entgegengesetzte Richtungen gedrückt werden kann, um den Elektromotor in entsprechenden entgegengesetzten Drehrichtungen zu betreiben. Auch möglich ist eine Gestaltung mit zwei Schaltern, von denen einer die Drehrichtung steuert und der andere zur Bestromung des Elektromotors vorgesehen ist.

Die Wechselvorrichtung einschließlich des Elektromotors kann als fest verbundene Einheit ausgebildet sein. Dies bedeutet, dass eine werkzeuglose Trennung des Elektromotors vom Rest der Wechselvorrichtung und insbesondere von der Basis und den Stellelementen nicht vorgesehen ist. Ein solcher Aufbau der Wechselvorrichtung gestattet eine vergleichsweise kleine Bauweise.

Die Wechselvorrichtung kann jedoch auch als modulare Wechselvorrichtung ausgebildet sein. Sie verfügt dann über mindestens zwei Teileinheiten, die miteinander einfach und vorzugsweise werkzeuglos in einen gekoppelten Zustand gebracht und voneinander getrennt werden können.

Die erste dieser Teileinheiten umfasst mindestens das Antriebsglied, das Getriebe zur Umsetzung der Bewegung des Antriebsgliedes auf die Stellelemente sowie die Stellelemente selbst. Es umfasst somit die wesentlichen mechanisch kraftübertragenden Komponenten des Systems. Vorzugsweise ist diese erste Teileinheit mit einer offenen Seite auf der den Stellelementen abgewandten Seite versehen, wobei diese offene Seite Zugang zum Antriebsglied gewährt.

Die zweite Teileinheit umfasst mindestens den Elektromotor, vorzugsweise zusätzlich die genannte Batterie und ggf. auch ein Untersetzungsgetriebe.

Die beiden Teileinheiten sind derart aufeinander abgestimmt, dass sie in einen gekoppelten Zustand gebracht werden können. In diesem gekoppelten Zustand ist der Elektromotor zumindest mittelbar an das Antriebsglied angekoppelt. Vorzugsweise kann zu diesem Zweck vorgesehen sein, dass eine Abtriebswelle der zweiten Teileinheit mit einer Kopplungskontur, vorzugsweise mit einem Innen- oder Außenmehrkant, versehen ist und dass das Antriebsglied oder ein damit drehfest verbundenes Zwischenteil eine korrespondierende Außen- oder Innenkontur zur formschlüssigen Kopplung und zur Übertragung von Momenten aufweist.

Die beiden Teileinheiten sind vorzugsweise derart aufeinander angepasst, dass ihre jeweiligen Gehäuse bzw. die Basis und der Stator des Elektromotors drehfest miteinander verbindbar sind, so dass das Antriebsmoment des Motors die Teileinheiten nicht als Ganzen gegeneinander verdreht. Zwingend erforderlich ist dies jedoch nicht.

Neben der Übertragung eines Drehmoments von der zweiten Teileinheit auf die erste Teileinheit ist deren Kopplung, die vorzugsweise werkzeuglos möglich ist, vorzugsweise auch dergestalt vorgesehen, dass die Teileinheit gegen ein Trennen in Richtung der Mittelachse gesichert ist. Hierdurch wird es möglich, nach Überführung des Spannkopfes in den komprimierten Zustand, diesen aus dem Spannfutter herauszuziehen, indem eine Zugkraft in die zweite Teileinheit eingeleitet wird, die wieder auf die erste Teileinheit und den daran angekoppelten Spannkopf wirkt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt eine Wechselvorrichtung aus zwei Teileinheiten in perspektivischer Darstellung und im noch nicht gekoppelten Zustand.
Fig. 2 zeigt die Wechselvorrichtung im gekoppelten Zustand der Teileinheiten in seitlicher Darstellung.
Fig. 3 zeigt die Rückseite der ersten Teileinheit der Wechselvorrichtung sowie einen Spannkopf, der mittels der Wechselvorrichtung bestimmungsgemäß in einen komprimierten Zustand zur Ankopplung an einem Spannfutter gebracht werden kann.
Fig. 4 zeigt die erste Teileinheit in geschnittener Darstellung.
Fig. 5 zeigt eine alternative Gestaltung der ersten Teileinheit.

### DETAILLIERTE BESCHREIBUNG DERAUSFÜHRUNGSBEISPIELE

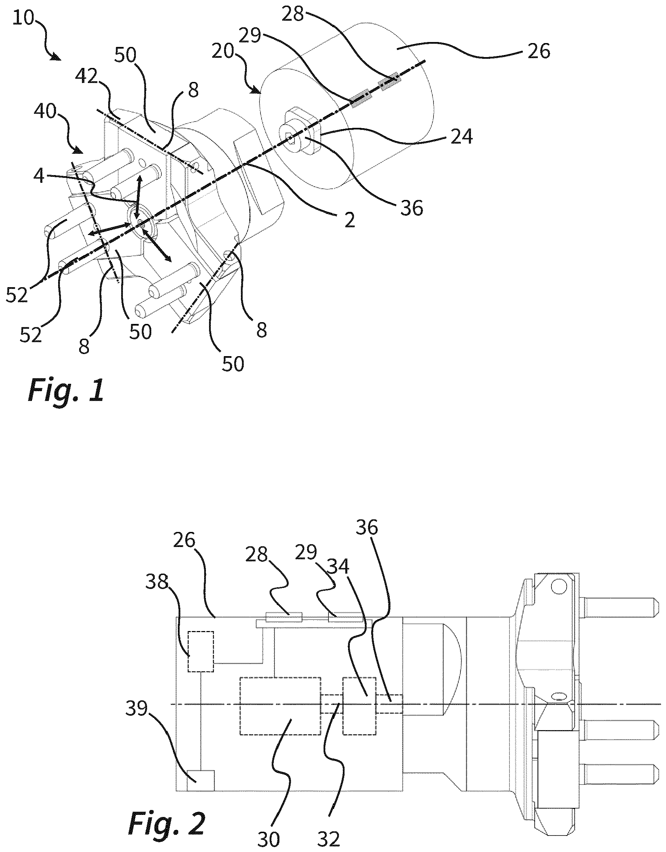

Die Figuren zeigen eine erfindungsgemäße Wechselvorrichtung 10. Diese Wechselvorrichtung 10 weist zwei Teileinheiten 20,40 auf, die in Fig. 1 im getrennten Zustand und in Fig. 2 im gekoppelten Zustand gezeigt sind.

Die Wechselvorrichtung 10 dient dem Zweck, die Spannbacken 104 eines Spannkopfes 100 gegen eine Rückstellkraft zusammenzudrücken, um hierdurch einen komprimierten Zustand des Spannkopfes herzustellen. Die Rückstellkraft kann insbesondereurch Elastomerblöcke 106 verursacht werden, mittels derer die Spannbacken 104 zu einem Ring zusammengefügt sind.

Im komprimierten Zustand kann der Spannkopf 100 in ein nicht dargestelltes Spannfutter eingeführt werden. Wird nach Einsetzen der komprimierte Zustand gelöst, so beabstanden sich die Spannbacken 104 des Spannkopfes 100 voneinander, so dass sie mit einer Haltekante 108 eine Haltekante des Spannfutters hintergreifen und dann gegen Herausziehen gesichert sind.

Die Demontage des Spannkopfes 100 aus dem Futter erfolgt analog. Auch hier werden die Spannbacken 104 mittels der Wechselvorrichtung 10 zusammengedrückt, so dass die Spannbacken 104 au-βer Eingriff mit der Haltekante des Spannfutters gelangen. Sobald dies der Fall ist, kann der Spannkopf 100 vom Spannfutter gelöst werden, indem er aus diesem herausgezogen wird.

Zur Ankopplung und Kraftbeaufschlagung des Spannkopfes 100 weist die Wechselvorrichtung 10 an ihrer ersten Teileinheit 40 insgesamt sechs Eingriffsabschnitte 52 auf, vorliegend in Form zylindrischer Stifte gestaltet, die zum Zwecke der Radialverlagerung in korrespondierende Bohrungen 110 an den Spannbacken 104 des Spannkopfes 100 eingeführt werden. Jeweils zwei dieser Eingriffsabschnitte 52 sind an einem gemeinsamen Stellelement 50 vorgesehen.

Die Stellelemente 50 sind entsprechend den Pfeilen 4 radial gegeneinander beweglich, wobei sie jeweils gemeinsam auf die Mittelachse 2 zubewegt oder gemeinsam von der Mittelachse 4 beabstandet werden, vorzugweise durch eine Schwenkbewegung. Die Bewegung der Stellelemente 50 und der Eingriffsabschnitte 52 aufeinander führt bei angekoppeltem Spannkopf zur beschriebenen Komprimierung.

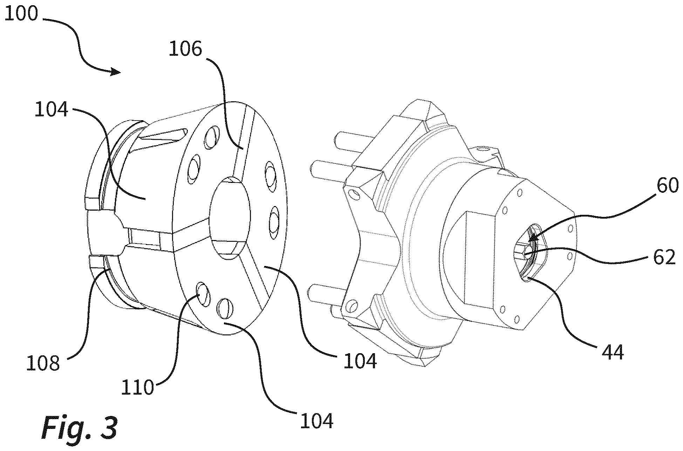

Die Stellelemente 50 sind vorliegend jeweils um tangentiale Schwenkachsen 8 schwenkbeweglich an einer Basis 42 der ersten Teileinheit 40 angebracht. Zum Zwecke ihrer Verlagerung ist an der gegenüberliegenden Seite der ersten Teileinheit 40 ein drehbewegliches Antriebsglied 60 vorgesehen. Diese weist eine Kopplungskontur 62 in Form eines Außensechskants auf, wie aus Fig. 3 ersichtlich ist.

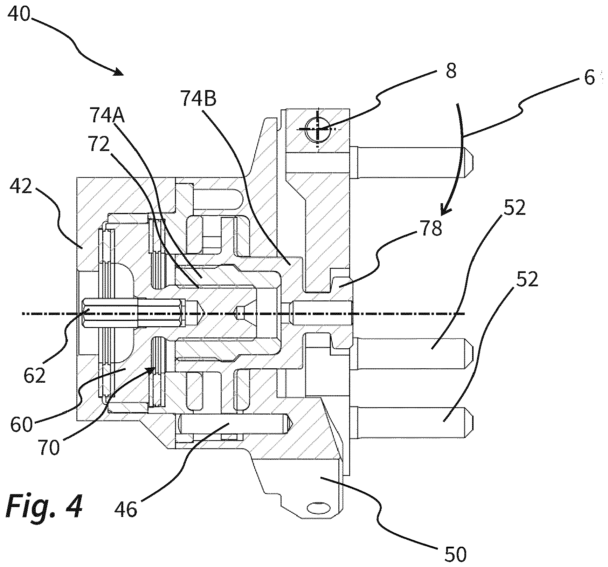

Erfolgt eine Drehbewegung des Antriebsgliedes 60 gegenüber der Basis 42, so wird dies über ein Getriebe an die Stellelemente 50 weitergegeben, so dass diese und die hieran befestigten Eingriffsabschnitte 52 radial nach innen oder radial nach außen verlagert werden. Dies wird im Weiteren anhand der Fig. 4 erläutert werden.

In Fig. 1 und 2 ist auch die zweite Teileinheit 20 dargestellt. Während die erste Teileinheit 40 gleichsam die mechanische Teileinheit darstellt und neben dem unmittelbaren Zusammenwirken mit dem Spannkopf 100 die Hauptaufgabe verrichtet, die rotatorische Bewegung des Antriebsgliedes 60 in die radiale Bewegung der Stellelemente 50 zu überführen, ist die zweiten Teileinheit 20 primär durch elektrische Komponenten geprägt.

Die zweite Teileinheit 20 verfügt über ein Gehäuse 26, welches sich drehfest und vorzugsweise werkzeuglos an der Basis 42 der ersten Teileinheit 40 befestigen lässt. Zum Zwecke der der drehfesten Kopplung sind korrespondieren unrunde Konturen 24, 44 an den beiden Teileinheiten 20, 40 vorgesehen.

Innerhalb des Gehäuses 26 ist ein Elektromotor 30 vorgesehen, der von einer wiederaufladbaren und/oderwechselbaren Batterie 38 mit elektrischer Energie versorgt wird. Zusätzlich oder alternativ kann der Elektromotor 30 auch über einen Stromanschluss 39 mit elektrischer Energie versorgt werden.

Die Abtriebswelle 32 des Elektromotors 30 ist mit einem Untersetzungsgetriebe 34 verbunden. Dessen Abtriebswelle 36 wiederum bildet die Abtriebswelle 36 der zweiten Teileinheit 20. Diese Abtriebswelle 36 ist, wie in Fig. 2 ersichtlich, mit einem Innensechskant versehen, um mit dem drehbeweglichen Antriebsglied 60 der ersten Teileinheit 40 drehfest verbunden zu werden, wenn die beiden Teileinheiten miteinander verbunden werden.

Die zweite Teileinheit 20 verfügt weiterhin über zwei Schaltelemente 28, 29. Ein erstes Schaltelement 28 dient der Steuerung der Drehrichtung des Elektromotors 30. Das zweite Schaltelement 29 dient der Aktivierung und Deaktivierung des Elektromotors 30.

Wie in Fig. 2 dargestellt und oben bereits erwähnt, können die Teileinheiten 20, 40 miteinander gekoppelt werden, wobei diese Kopplungzu einer drehfesten Anbringung des Gehäuses 26 an die Basis 42 führt. Vorzugsweise sind die Teileinheiten 20, 40 auch gegen Auseinanderziehen gesichert sind, beispielsweise indem die Konturen 24, 44 eine entsprechende Formgebung aufweisen oder indem zusätzliche Kopplungselemente hierfür vorgesehen sind.

Im gekoppelten Zustand der Fig. 2 koppelt die Abtriebswelle 36 der zweiten Teileinheit 20 mit der Kopplungskontur 62 am Antriebsglied 60 der ersten Teileinheit 40. Der Elektromotor 30 ist somit in der Lage, das Antriebsglied 60 gegenüber der Basis 42 zu drehen.

Fig. 4 verdeutlicht, wie dieses Drehen des Antriebgsgliedes 60 auf die Stellelemente 50 und die Eingriffsabschnitte 52 wirkt. Das Antriebsglied 60 ist drehbar an der Basis 42 gelagert, gegenüber dieser jedoch nicht axial verlagerbar. Über einen Gewindetrieb 72 steht das Antriebsglied 60 im Eingriff mit einer zweiteiligen Schiebehülse 74A, 74B, deren beide Elemente 74A, 74B fest miteinander verbunden sind. Die Schiebehülse 74A, 74B ist axial gegenüber der Basis 42 verlagerbar, durch einen Sicherungsstift 46 jedoch gegen Verdrehen gesichert. Eine Drehbewegung des Antriebsgliedes 60 bewirkt daher eine axiale Verlagerung der Schiebehülse 74A, 74B.

Ein äußeres Element 74B der Schiebehülse 74A, 74B wirkt mittels eines außenliegenden Ringstegs 78 auf die Stellelemente 50. Werden die Schiebehülse 74A, 74B bezogen auf die Perspektive der Fig. 4 nach links verlagert, so schwenken die schwenkbaren Stellelemente 50 mit den Eingriffsabschnitten 52 nach innen, wie durch den Pfeil 6 verdeutlicht.

Ist in dieser Phase der Spannkopf 100 mittels der Eingriffsabschnitte 52 an die Wechselvorrichtung 10 angekoppelt, so werden dessen Spannbacken 104 aufeinander zu gedrückt und der Spannkopf 100 somit komprimiert, so dass er in diesem komprimierten Zustand in ein Spannfutter eingesetzt werden kann und aus diesem entnommen werden kann.

Dieser Zustand des Spannkopfes 100, der an der ersten Teileinheit 40 über die Eingriffsabschnitte 52 gehalten ist, wird aufgrund der Selbsthemmung des Gewindetriebs 72 auch dann gehalten, wenn die zweite Teileinheit 20 von der ersten Teileinheit 40 getrennt wird.

Dies gestattet es, bspw. bei der Entfernung des Spannkopfes 100 vom Spannfutter, mit den beiden gekoppelten Teileinheiten 20, 40 der Wechselvorrichtung den komprimierten Zustand herzustellen und anschließend die zweite Teileinheit zu lösen und erst nach der Trennung der zweiten Teileinheit 20 von der ersten Teileinheit 40 den Spannkopf 100 zusammen mit der ersten Teileinheit 40 vom Spannfutter zu lösen.

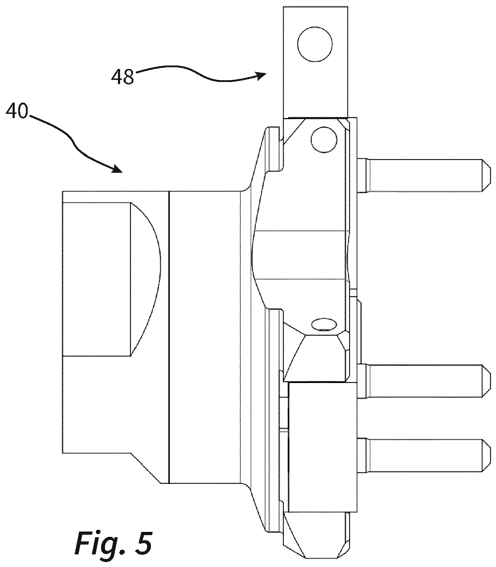

Fig. 5 zeigt eine Variante der ersten Teileinheit 40, bei der diese mit einem Handgriff 48 versehen ist, um die Handhabung des daran angekoppelten Spannkopfes 100 zu erleichtern.

Bei der Gestaltung der Figuren ist die Wechselvorrichtung 10 als modulare Vorrichtung mit den beschriebenen beiden Teileinheiten 20, 40 ausgebildet. Dies ist jedoch nicht zwingend. Es ich auch eine Gestaltung denkbar, bei der die beiden Teileinheiten 20, 40 fest miteinander verbunden sind und nur mittels eines Werkzeugs voreinander lösbar sind. In einem solchen Fall kann die Abtriebswelle 32 des Motors 30 oder die Abtriebswelle 36 des Untersetzungsgetriebe 34 fest mit dem Antriebsglied 60 verbunden sein.

## Patentansprüche

**1.** Wechselvorrichtung (10) für Spannköpfe (100) mit den folgenden Merkmalen:
a. die Wechselvorrichtung (10) ist zum Einsetzen eines Spannkopfes (100) in ein Spannfutter und/oder zum Entfernen des Spannkopfes (100) aus dem Spannfutter ausgebildet, wobei der Spannkopf (100) eine Mehrzahl von in einer Radialrichtung (4) gegeneinander verlagerbaren Spannbacken (104) aufweist, die mittels der Wechselvorrichtung (10) in Radialrichtung aufeinander zu oder voneinander weg gegeneinander kraftbeaufschlagbar sind, und
b. die Wechselvorrichtung (10) verfügt über eine Basis (42), und
c. die Wechselvorrichtung (10) verfügt über eine Mehrzahl von Stellelementen (50), die schwenkbar und/oder translativ beweglich an der Basis (42) angebracht sind und die jeweils über mindestens einen Eingriffsabschnitt (52) zur Kraftbeaufschlagung der Spannbacken (104) verfügen, und
d. die Wechselvorrichtung (10) verfügt über ein gegenüber der Basis um eine Mittelachse (2) drehbewegliches Antriebsglied (60), und
e. das Antriebsglied (60) ist mittels eines Getriebes (70) mit den Stellelementen (50) gekoppelt, so dass durch eine Rotationsbewegung des Antriebsgliedes (60) die Stellelemente (50) gemeinsam aufeinander zu oder voneinander weg bewegt werden können.

**2.** Wechselvorrichtung (10) nach einem der vorstehenden Ansprüche mit den folgenden weiteren Merkmalen:
a. das Getriebe (70) verfügt über eine Schiebehülse (74A, 74B), die translativ beweglich und drehfest an der Basis (42) angebracht ist und die mittels eines Gewindetriebs (72) mit dem Antriebsglied (60) gekoppelt ist, und
b. die Schiebehülse (74A, 74B) ist mit den Stellelementen (50) gekoppelt,
vorzugsweise mit mindestens einem der folgenden zusätzlichen Merkmale:
c. die Schiebehülse (74) weist einen Anschlagssteg (78) auf, mittels dessen sie auf Anschlagsflächen an den Stellelementen (50) oder an einem Zwischenglied wirkt.

**3.** Wechselvorrichtung (10) nach einem der vorstehenden Ansprüche mit den folgenden weiteren Merkmalen:
a. das Getriebe verfügt über mindestens eine Nockenscheibe, die um die Mittelachse drehbar ist und vorzugsweise drehfest mit dem Antriebsglied verbunden ist, und
b. die Nockenscheibe wirkt unmittelbar oder mittelbar auf die Stellelemente.

**4.** Wechselvorrichtung (10) nach einem der vorstehenden Ansprüche mit den folgenden weiteren Merkmalen:
a. die Wechselvorrichtung (10) verfügt über eine elektrische Antriebseinheit, und
b. die Antriebseinheit verfügt über einen Elektromotor (30) mit einer Abtriebswelle (32), die mit dem Antriebsglied (60) gekoppelt ist.

**6.** Wechselvorrichtung (10) nach einem der vorstehenden Ansprüche mit dem folgenden weiteren Merkmal:
a. die Wechselvorrichtung verfügt über ein Untersetzungsgetriebe (34), zwischen den Abtriebswellen (32) des Elektromotors (30) und dem Antriebsglied (60) oder zwischen dem Antriebsglied (60) und den Stellelementen (50).

**7.** Wechselvorrichtung (10) nach einem der vorstehenden Ansprüche mit den folgenden weiteren Merkmalen:
a. die Wechselvorrichtung (10) verfügt über eine Batterie (38) zur Versorgung des Elektromotors (30), und/oder
b. die Wechselvorrichtung (10) verfügt über einen Taster (28A) zur Aktivierung des Elektromotors (30), und/oder
c. die Wechselvorrichtung (10) verfügt einen Schalter (28B) zur Drehrichtungsumkehr des Elektromotors (30).

**8.** Wechselvorrichtung (10) nach einem der Ansprüche 5 bis 7 mit den folgenden weiteren Merkmalen:
a. die Wechselvorrichtung (10) ist als modulare Wechselvorrichtung ausgebildet und verfügt über mindestens zwei Teileinheiten (20, 40), die miteinander einfach und vorzugsweise werkzeuglos in einen gekoppelten Zustand gebracht und voneinander getrennt werden können,und
b. die erste Teileinheit (40) umfasst mindestens das Antriebsglied (60), das Getriebe (70) und die Stellelemente (50), und
c. die zweite Teileinheit (20) umfasst mindestens den Elektromotor (30), und
d. die Teileinheiten (20, 40) sind derart aufeinander abgestimmt, dass im gekoppelten Zustand der Elektromotor (30) zumindest mittelbar an das Antriebsglied (60) angekoppelt ist, vorzugsweise mit mindestens einem der folgenden zusätzlichen Merkmale:
e. die zweite Teileinheit (20) umfasst die Batterie (38), und/oder
f. die zweite Teileinheit (20) umfasst das Untersetzungsgetriebe (34).

**9.** Wechselvorrichtung (10) nach Anspruch 8 mit den folgenden weiteren Merkmalen:
a. das Antriebsglied (60) weist eine Kopplungskontur (62) auf, vorzugsweise in Form eines Außen- oder Innenmehrkants, insbesondere in Form eines Außen- oder Innensechskants, und
b. eine Abtriebswelle (36) der zweiten Teileinheit (20) weist eine korrespondiere Kopplungskontur auf.

**10.** Wechselvorrichtung (10) nach Anspruch 8 oder 9 mit den folgenden weiteren Merkmalen:
a. die zweite Teileinheiten (20) ist mit der ersten Teileinheit (40) derart drehfest verbindbar, dass ein Stator des Elektromotors (30) und die Basis (42) zueinander drehfest sind, und/oder
b. die zweite Teileinheiten (20) ist mit der ersten Teileinheit (40) derart verbindbar, dass sie gegen ein Trennen in Richtung der Mittelachse (2) gesichert sind.

**11.** Wechselvorrichtung (10) nach einem der Ansprüche 8 bis 10 mit dem folgenden weiteren Merkmal:
a. die erste Teileinheit (40) weist einen Handgriff (48) zur Handhabung der ersten Teileinheit (40) und eines daran angekoppelten Spannkopfes nach Abkoppelung der zweiten Teileinheit (20) auf.

**12.** Wechselvorrichtung (10) nach einem der vorstehenden Ansprüche mit mindestens einem der folgenden weiteren Merkmale:
a. es sind insgesamt drei Stellelemente (50) vorgesehen, die gemeinsam zur Mittelachse (2) hin und von der Mittelachse (2) weg bewegbar sind, und/oder
b. die Stellelemente (50) sind als Schwenkelemente ausgebildet, die jeweils um eine Schwenkachse (8) schwenkbeweglich an der Basis (42) angebracht sind, und/oder
c. die Stellelemente (50) verfügen über Eingriffsabschnitte (52) in Form von zylindrischen Stiften, wobei vorzugsweise jedes Stellelemente (50) über mindestens zwei Eingriffsabschnitte (52) in Form parallel erstreckter zylindrischer Stifte verfügt.
